# EUROPEAN PATENT SPECIFICATION

(11) **EP 3 363 114 B1**
(45) Date of publication and mention of the grant of the patent: **03.06.2020**
(21) Application number: 15793858.0
(22) Date of filing: 15.10.2015
(51) Int. Cl.: H02P 9/00

(54) **METHOD OF CONTROLLING OPERATION OF AN ENGINE OF A GENERATOR SET, AND A CONTROL UNIT FOR AN ENGINE OF A GENERATOR SET**
VERFAHREN ZUR STEUERUNG DES BETRIEBS EINES MOTORS EINES GENERATORSATZES UND STEUERUNGSEINHEIT FÜR EINEN MOTOR EINES GENERATORSATZES
PROCÉDÉ DE COMMANDE DU FONCTIONNEMENT D'UN MOTEUR D'UN GROUPE ÉLECTROGÈNE, ET UNITÉ DE COMMANDE POUR UN MOTEUR D'UN GROUPE ÉLECTROGÈNE

(43) Date of publication of application: 22.08.2018
(73) Proprietor: Wärtsilä Finland Oy, 65100 Vaasa (FI)
(72) Inventor: SAIKKONEN, Ari, 65101 Vaasa (FI); KAAS, Tom, 65101 Vaasa (FI); KARJALAINEN, Jenni, 65100 Vaasa (FI)
(74) Representative: Genip Oy
(86) International application number: PCT/FI2015/050698
(87) International publication number: WO 2017/064358

(56) References cited:
- US-A1- 2009 108 678
- US-A1- 2015 069 858

## Description

### Technical field

This invention relates to sharing power production among generator sets that are connected to an electric power network or grid. Particularly the invention relates sharing load between the engines of the generator sets during transient load situations.

### Background art

A generator set comprises a generator and a prime mover which provides mechanical work to rotate the generator under load. When connected to a grid the generator sets supply power the power network. The generated power is consumed by loads connected to the grid. Due to that the power allocation of the generators is usually called load sharing.

Such power networks are also utilized marine vessel whereas the propulsion system, as well as other electric devices, is connected to the grid as the loads. When two or more generator sets are paralleled for capacity or redundancy they must all be governed appropriately.

Document US 2009108678 A1 discloses a method of operating a power system which has a plurality of generator sets and a bus. The method monitors the bus and generator sets disconnected from the bus. The method supplies to a control device information associated with the operating state of each of the generator sets and the bus. The method determines a relative frequency mismatch, multiplied by a first weight factor, and a relative phase mismatch, multiplied by a second weight factor, between the frequency and phase of the bus and a generator, and generates a frequency speed bias and a phase speed bias for the generator. The method adds the frequency and phase speed biases to form a total speed bias and connects the generator to the bus when the voltage, frequency, and phase of the generator are within a permissible range of the bus.

US2015069858 A1 discloses a solution where a set of generators are connected in parallel using an electrical bus. One of the generators includes selectively connected inputs including a first input associated with a generator and a second input associated with the bus. A controller is configured to receive a first electrical characteristic from the first input assigned to a first connection and a second electrical characteristic from the second input assigned to a second connection. The controller is configured to generate a switching signal to assign the first input to the second connection or assign the second input to the first connection in response to a difference between the first electrical characteristic and the second electrical characteristic exceeding a threshold.

In multi-engine marine installations an isochronous (same speed) load sharing mode is a commonly used speed/load control mode. The isochronous sharing mode maintains constant speed regardless of load level. Small variations on the speed of the prime mover still occur and their extent is a measure of the governor's stability. Thus the frequency and voltage of the system remains constant, providing much higher power quality than that of a so called droop control system.

To permit each generator set to carry its proportion of the total load, an isochronous load sharing control will sample the voltage and current information from each generator. With this information from each of the generator sets, the isochronous load sharing control can calculate correction signals for each generator set governor and adjust the fuel rate, which allows proportioning the total load to each generator, according to its capability.

Load sharing among the generator sets connected to a common load is achieved by setting a load reference to a mean value of all the generator sets. Typically the control strategy which is used in an engine is that if the load the engine is less than load reference, the speed reference value is increased in order to gain load and vice versa.

It is an object of the invention to provide a method of controlling operation of an engine of a generator set in which load sharing is accomplished in improved manner.

It is also an object of the invention to provide a control unit for an engine of a generator set which provides improved load sharing operation.

### Disclosure of the Invention

The objects of the invention are met as is disclosed in the independent claims and in the other claims describing more details of different embodiments of the invention.

In the method of controlling operation of an engine of a generator set in an assembly of at least two generator sets coupled parallel to an electric grid, the load sharing between the engines is controlled such that the capability of the engine is taken into account when assigning the engine's share of the load demand of the grid.

In the method an actual engine speed is determined or measured, and fuel feeding into the engine is controlled making use of the actual engine speed and a speed reference value. An actual engine load is determined or measured and a load reference value is determined based on the actual engine loads of the engines coupled to the electric grid, and the speed reference value is determined such that the speed reference value is a sum of:
a first part of the speed reference value obtained by making use of the actual engine load and the load reference value, and
a second part of the speed reference value obtained by
   identifying transient state from the load reference value and
   combining the transient state with engine characteristics to provide the second part of the speed reference value.

This way it is possible the load the engines in transient situations in optimized manner and avoid or minimize a risk of engine running in a state which is undesired, such as knocking or misfire. In this context the term load may also mean a signal indicative of the load.

According to an embodiment of the invention the combining the transient state with engine characteristics comprises defining a time derivative of the load reference value and multiplying the time derivative with a factor determined based on engine characteristics.

More precisely, the speed reference value for an individual engine is determined such that the first part of the speed reference value is calculated as a function of the actual engine load and the load reference value e.g. such that the speed reference value is obtained by subtracting the load reference value from the actual engine load and multiplying the reminder with a predetermined factor..

Advantageously the load reference is a manipulated value of the individual actual engine loads of the engines running the generator sets connected to the electric grid. Advantageously the load reference is an average load value of the individual loads of the engines running the generator sets which are coupled to the grid. This is a straightforward manner of determining the transient state.

According to an embodiment of the invention the actual engine load is determined for each one of the engines connected to the electric grid, and the actual engine load of each one of the engines connected to the electric grid is shared between the other engines connected to the electric grid, and the load reference is determined based on the shared actual engine loads. The controls system comprises a data bus via which the engine load, among other data, is shared between the engines.

According to an embodiment of the invention the transient state is identified by calculating a time derivative of the load reference value and the second part of the speed reference value is obtained by multiplying the time derivative with a factor defined based on the engine characteristics. The method is repeated successively and when a transient change in the load takes place the second part of the speed references value is changed. This way the identifying the transient state means preferably substantially continuous monitoring of the transient state or transient behaviour of the load reference value. Thus in addition to mere identification of the transient state, a magnitude and duration of transient state is identified and taken into account in determination of the speed reference value.

According to an embodiment of the invention the second part of the speed reference value is determined in a feed-forward control.

According to an embodiment of the invention the engine characteristics comprise a factor based on the engine's capability of handling transient load changes.

According to an embodiment of the invention the engine is a so called dual fuel engine which is adapted to be operated selectively in two alternative operating modes: diesel mode and gas mode, and in this embodiment the engine characteristic comprises a factor depending on currently applied operating mode. Thus, the forward feed-control utility, where the second part of the speed reference value is obtained, is arranged to utilize the engine characteristic comprising the factor depending on current operating mode information of the engine.

In case of the dual fuel engine the engine characteristic consists advantageously of two factors of which the first factor is the factor depending on or being in relation to currently applied operating mode of the engine, and the second factor is a variable effecting increasingly or decreasingly to the engine characteristic value.

According to an embodiment of the invention the second part of the speed reference value is determined in a feed-forward control unit such that a time derivative of the load reference value is calculated and filtered by a filter and the result of which made use in obtaining the second speed reference value. The filter may be e.g. a suitably tuned low-pass filter or band-stop filter.

The method may be used for an assembly of at least two generator sets coupled parallel to an electric grid, wherein at least a first generator set of said at least two generator sets is independently operated according to the invention and at least a second generator set of said at least two generator sets is independently operated according to the invention.

In this case a load reference value common to all of the engines connected to the electric grid is determined, and an engine in a first generator set of said at least two generator sets is operated applying the method according to the invention, an engine of at least a second generator set of said at least two generator sets is operated applying the method according to the invention, wherein the speed reference value for the engine in the first generator set is determined using different engine characteristics than those used for determining the speed reference value for the engine in the at least a second generator set.

According to an embodiment of the invention at least a first generator set of said at least two generator sets is operated such that
- actual engine speed is determined or measured, and fuel feeding into the engine is controlled making use of the actual engine speed and a first speed reference value,
- actual engine load is determined or measured and the first speed reference value is determined making use of the actual engine load and the load reference value,
   and at least a second generator set of said at least two generator sets is operated such that
- actual engine speed is determined or measured, and fuel feeding into the engine is controlled making use of the actual engine speed and a second speed reference value,
- actual plant load is determined or measured and the second speed reference value is determined making use of the actual engine load and the load reference value,
   and such that
- the first speed reference value is determined independently from the second speed reference value such that a first part of the first speed reference value is obtained making use of the actual engine load and the load reference value, and a second part of the first speed reference value is obtained making use of the load reference value and engine characteristics, and that the
- the first speed reference is a sum of the first and the second parts of the first speed reference values,
- and the second speed reference value is determined independently from the first speed reference value such that a first part of the second speed reference value is obtained making use of the actual engine load and the load reference value, and a second part of the first speed reference value is obtained making use of the load reference value and engine characteristics, and that the
- the second speed reference is a sum of the first and the second parts of the second speed reference values.

Control unit for an engine of a generator set in an assembly of at least two generator sets coupled parallel to an electric grid comprises at least one control signal output for providing a control signal for the engine based on which the fuel admission is controlled, a first control signal input which is connectable with a source of load reference value, a second control signal input which is connectable to a source of actual engine speed value, a third control signal input which is connectable to a source of actual plant load value, a speed controlled unit arranged to provide the control signal for the engine based on the actual engine speed value and a speed reference value and a load controller unit arranged to provide the speed reference value.

In the control unit the load controlled unit comprises a primary load controller unit and a secondary load controller unit coupled parallel with each other, in which the primary load controller unit is arranged to produce a first part of the speed reference value making use of the actual engine load and the load reference value, and the secondary load controller unit is arranged to provide the second part of the speed reference value based on transient state of the load reference value and predetermined engine related characteristics.

According to an embodiment of the invention the secondary load controller unit comprises a calculation unit, a load gain determination unit and amplification unit, wherein the calculation unit is arranged to provide time derivative calculation of the load reference value, and the load gain determination unit is arranged to provide supply signal for the amplification unit according to the existing engine characteristics, which amplification unit is arranged to provide the second part of the speed reference value using the time derivative of the load reference value.

According to an embodiment of the invention the secondary load controller unit comprises a calculation unit and a filter unit adapted to manipulate successively the load reference value for use as input value in the amplification unit.

According to the invention the active load shaping control is achieved by introducing a feedforward controller unit in parallel to a main load controller unit. In this application the main load controller unit is called the primary load controller unit. This provides the effect of increase/decrease the speed reference value based on changes or change rates in the plant load demand.

Particularly when at least one of the engines is a gas operated piston engine, the transient loading capability of an engine depends on many different particulars. The loading capability of engines in generator sets differ somewhat from each other due to e.g. on engine/turbo charger size, engine status (load reduction) and , fuel grade currently in use and rated power of the of the engines. It is even possible that various differently sized generator sets are paralleled. This means that during transient loading of the generator sets some of the engines are more capable to handle the transient conditions than others.

Also, in the assembly engines that are sensitive e.g. for detonation, for misfiring, for rapid warming up, in producing of inlet air pressure, running with fuel with low calorific value fuel, etc, can be relaxed during load transients in the plant loading. Respectively, engines that are insensitive for the mentioned - or other similar - engine characteristics can be configured to take significant part of the plant load transients.

As an advantageous application of the invention is providing a dredger vessel with at least two generator sets, of which at least one is powered with gas operated piston engine. During the operation of a dredger the electric power demand involves considerable number of transient situations due to both the dredging equipment and the electric propulsion system of the dredger. An engine of a generator set in an assembly of at least two generator sets coupled parallel to an electric grid of the dredger vessel is advantageously operated according to the method disclosed in anyone of the method claims. The generator sets of the dredger are provided with a control unit according to anyone of the independent apparatus claims.

Even if the electric grid, which is loaded by the electric propulsion system and/or the dredging equipment, is subjected to fluctuating load, by means of the invention it is possible to successively utilize a gas operated piston engine in the demanding circumstances as a dredger application.

### Brief Description of Drawings

In the following, the invention will be described with reference to the accompanying exemplary, schematic drawings, in which
Figure 1 illustrates schematically an assembly of generator sets according to an embodiment of the invention,
Figure 2 illustrates a generator set of an assembly of generator sets according to an embodiment of the invention,
Figure 3 illustrates a secondary load controller unit according to an embodiment of the invention, and
Figure 4 illustrates a speed reference value and respective plant load according to an embodiment of the invention.

### Detailed Description of Drawings

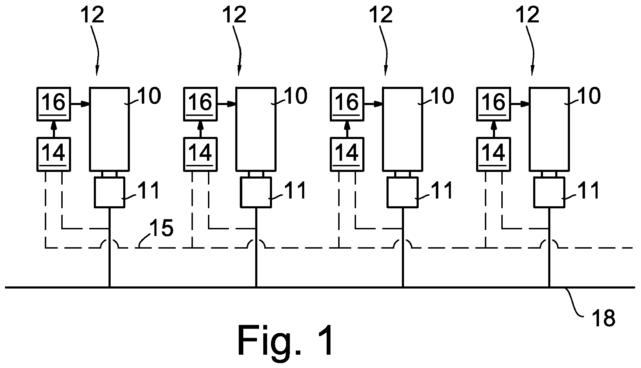

Figure 1 depicts schematically an assembly of generators sets where a number of internal combustion piston engines 10 are connected as prime movers to a generator 11, thus forming a generator set 12. The generator sets 12 are connected to an electric grid 18. The generator set 12 comprises a load sharing unit 14 and a control unit 16. The load sharing unit and the control unit may be also integrated with each other. The load sharing unit 14 is assigned to take care of controlling the sharing of the load of the grid 18 between the generator sets 12, and the control unit 16 is assigned to take care of the speed and/or load control of an individual engine 10. The load sharing units 14 of the engines are connected with each other via a data bus 15. This way it is possible to transmit control-related data between the engines 10. The speed and/or load control of an individual engine 10 is obtained by controlling the fuel admission to the engine in question. The grid 18 and its couplings to the generator sets 12 usually comprise suitable circuit breakers which are not shown for clarity reasons.

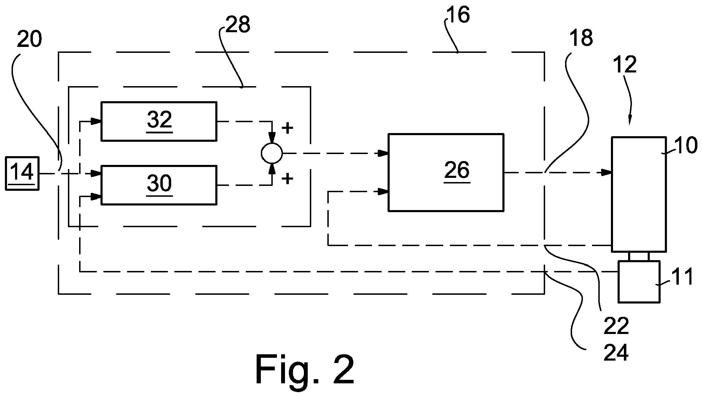

In figure 2 there is shown one generator set 12. The engine 10 is connected to the generator 11 such that it may rotate the generator at desired speed and provide mechanical power to generate electric power. There is also shown a control unit 16, which is adapted to control the fuel admission to the engine 10. The control unit 16 is provided with at least one control signal output 18 which is connected to fuel admission system (not shown) of engine to provide a control signal based on which the fuel admission to the engine is controlled. The control unit 16 is also provided with at least a first control signal input 20 which is connected with a source of load reference value. In this embodiment the source of the load reference value is the load sharing unit 14. The load sharing units 14 (Figure 1) of the engines 10 connected to the grid are connected with each other such that the actual engine load of each one of the engines is made available to the load sharing units of other engines 10 for determination of a load reference value. It is also conceivable that the load sharing of all the engines is controlled in centralized manner and the load reference value for each engine is determined in a common load sharing unit (not shown). The load sharing unit comprises executable instructions to determine the load reference value such that the load reference value is an average of the individual loads of the number of engines 10, as shown in figure 1, connected to the grid. Thus the load sharing unit 14 of each engine is provided with information of or access to the individual load of each one of the engines 10.

The control unit 16 is also provided with a second control signal input 22 and a third control signal input 24. These are arranged to receive actual values obtained from the generator set for proving feedback to the control unit 16. The second control signal input 22 is connected to a source of engine speed value. The source of engine speed value may be e.g. a speed sensor assembled to the engine. This provides the information of actual speed of the engine to the control unit 16. The third control signal input 24 is connected to a source of actual engine load value, which actual engine load value is made use by the control unit 16.

The control unit 16 is provided with a speed controller unit 26. The speed controller unit 26 is connected to the second control signal input 22 so that it may receive the actual engine speed as one of its input values. The speed control unit 26 is also connected to the control signal output 18 of the control unit 16 so that it may provide the control signal for adjusting the fuel admission to the engine 10.

The control unit 16 is also provided with a load controller unit 28. The load controller unit 28 is arranged to provide a speed reference value to be used as an input signal in the speed controller unit 26. Thus, the speed controller unit 26 is arranged to determine the control signal for adjusting the fuel admission to the engine 10 based on the actual engine speed and the speed reference value provided by the load control unit 28.

The third control signal input 24 is connected to the load controller unit 28 as input signal providing the actual load of the engine as feedback signal to the load controller unit 28. The load controller unit 28 is connected to the first control signal input 20 of the control unit and thus also to the source of load reference value. The load reference value and the engine's actual load are made use in the load controller unit 28 to provide the speed reference value for the speed controller unit 26. Thus the load controller unit 28 is arranged to determine the speed reference value making use of the actual engine load and the load reference value.

Now, according to the invention the load controller unit 28 comprises a primary load controller unit 30 and a secondary load controller unit 32, which are coupled parallel with each other. The third control signal input 24 is connected to the primary load controller unit 30 of the load controller unit 28. This way the actual load of the engine 10 is made available to the primary load controller unit 30. The primary load controller unit 30 is arranged to produce a first part of the speed reference value making use of the actual engine load and the load reference value. The first control signal input 20 is connected to both the primary load controller unit 30 and the secondary load controller unit 32 to provide an input signal of the load reference value to the controller units 30, 32.

The secondary load controller unit 32 is a feedforward control unit arranged to effect on the speed reference value made available to the speed controller unit 26 by the primary load controller unit 30. The second part of the speed reference value is added to the first part of the speed reference value and forming the actual speed reference value for use in the speed controller unit 26. Thus the first part of the speed reference value is corrected by the second speed reference value by summing the values. This makes it possible to actively either increase or decrease the loading of the engine independently from the primary load controller unit 30. The secondary load controller unit 32 is arranged to provide the second part of the speed reference value based on predetermined engine related characteristics. Such engine related characteristics are related to engines capability of coping with transient loading situations. It should be understood that in this context the wording "engine related" means one or more variables which effect on engines performance, even if being external to the engine, such as fuel grade or intake air temperature, intake are pressure, turbocharger speed and/or engine's cooling water temperature.

For example, the turbocharger which is used in the engine effects on the engines capability of quick load changes. In case the turbocharger is of type which has limited power at low loads the secondary load controller unit 32 may have instructions to increase the speed reference value at low load range. This way the secondary load controller may compensate the effects of the characteristics of the turbocharger i.e. the engine characteristics. Also, there may be a certain status or restriction assigned to the engine in its control system which effects on the transient behaviour. Also used fuel type or grade may effect on engines transient behaviour. This means that during transient loading of the engine some of the engines are in better position to handle the transient conditions. By means of the invention it is possible to effect on the speed reference value which is based on the first control signal and simultaneously taking care of any predetermined engine related characteristics.

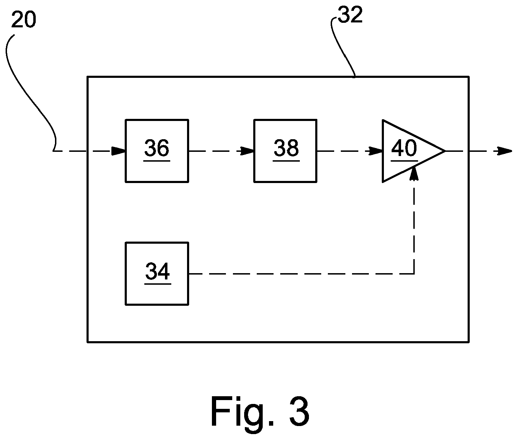

In figure 3 there is shown a secondary load controller unit 32 according to an embodiment of the invention is more detailed manner. The secondary load controller unit comprises a calculation unit 36 and a filter unit 38 adapted to manipulate successively the load reference value obtainable via the first control signal input 20.

The calculation unit 36 is arranged to provide time derivative calculation of the load reference value. This way the secondary controller unit 32 operates as a transient state compensating controller. The output signal of the calculation unit represents the change rate of the load reference value. The change rate of the plant load value is next processed in the filter unit 38. The filter unit 38 provides a feature which allows the selection of range of load change rate to which the secondary control unit 32 is desired to have an effect on. According to an embodiment of the invention the filter unit comprises a low pass filter, by means of which such changes, which are too fast for the engine's transient capability to cope with are ruled out. The filter unit 38 may also comprise a band-stop filter which filters out a predetermined, undesired range of the change rate.

Additionally the secondary load controller unit 32 comprises a load gain determination unit 34 and amplification unit 40. The load gain determination unit 34 is arranged to provide supply signal for the amplification unit according to the existing engine characteristics. The output signal from the gain determination unit 34 may be positive or negative for enhancing or suppressing effect. Thus the effect of the secondary load controller unit 32 depends on the change rate of the load reference value and the magnitude of the effect of the secondary controller unit 32 can be controlled according to the prevailing engine characteristics. The load gain determination unit 34 may be provided with suitable inputs (not shown) for determine the engine characteristics and/or their influence in the control. Additionally or alternatively the load gain determination unit 34 may have, or may have access to, a storage unit containing suitable information for determine the engine characteristics and/or their influence in the control, as mentioned earlier.

Referring back to figure 1 as an example of the invention, one may consider that the engines 10 are identical, so called dual fuel engine which are adapted to use gaseous fuel as a main fuel operating in so called gas mode and to use liquid fuel as a backup fuel operating in so called diesel mode. Assuming that some of the engines are operating in gas mode and some of the engines are operating is diesel mode, in the assembly those operating in gas mode are more sensitive to rapid load changes than those operating in diesel mode.

Thus, the engines running in the gas mode are operated such that actual engine speed is determined or measured, and fuel feeding into the engine is controlled making use of the actual engine speed and a first speed reference value. Additionally, the first speed reference value is determined such that a first part of the first speed reference value is obtained making use of the actual engine load and the load reference value, and a second part of the first speed reference value is obtained making use of the load reference value and engine characteristics in gas mode.

According to an embodiment of the invention the engine characteristic in the gas mode consist simply of a first factor which is adapted to generally correspond to the transient behaviour of the gas mode operation of the engine and a second factor is a variable effecting increasingly or decreasingly to the first factor and the engine characteristic value.

The engines running in the diesel mode are operated such that actual engine speed is determined or measured, and fuel feeding into the engine is controlled making use of the actual engine speed and a second speed reference value. Additionally, the second speed reference value is determined independently from the first speed reference value such that a first part of the second speed reference value is obtained making use of the actual engine load and the load reference value, and a second part of the first speed reference value is obtained making use of the load reference value and engine characteristics in diesel mode. According to an embodiment of the invention the engine characteristic in the diesel mode consist simply of a first factor which is adapted to generally correspond to the transient behaviour of the diesel mode operation of the engine and a second factor is a variable effecting increasingly or decreasingly to the first factor and the engine characteristic value.

Thus according to an embodiment of the invention the load transients in the plant load can be shaped e.g. in a way that the engines that are running in diesel mode take significant part of the load transient and the plants overall stability is increased.

The invention may also be used in connection with a number of gas engines 10 where at least one of the engines has a distinct characteristic which requires dedicated control treatment, such as operation with narrower knocking margin than the others.

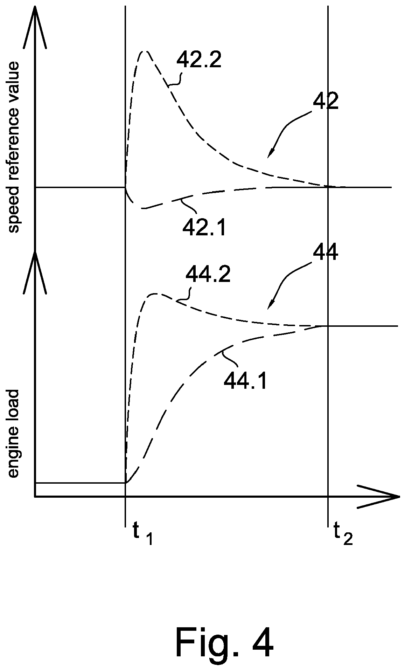

In figure 4 there are shows curves 42,44 in a time scale (horizontal axis), in which the upper curve 42 shows a speed reference value provided by the load controlled unit 28 and the lower curve 44 shows respective plant load. The dotted lines represent alternative and exemplary control schemes according to the invention. As can be seen there is a transient load increase taken place during the time period t₁ to t₂. Continuing with the above example the engines running in gas mode are controlled according to curve 42.1, which result in increase of load according to the curve 44.1 in the figure. Respectively, the engines running in diesel mode are controlled according to the curve 42.2, which in turn result in increase of load according to the curve 44.2. The curves represent naturally only two different cases and it is clear that the shape of the reference value may be adjusted and controlled according to the respective engine characteristics.

This way the engines that are more sensitive e.g. for detonation, misfiring, rapid warming, inlet air pressure, having low heating value of fuel, etc, can be relaxed during load transients in the plant loading (curves 42.1, 44.1). Respectively, engines which are more insensitive for the above mentioned factors can be configured to take significant part of the plant load transients (curves 42.2, 44.2).

## Claims

1. Method of controlling load sharing operation of an engine of a generator set (12) in an assembly of at least two generator sets (12) coupled parallel to an electric grid (18), wherein method,
- actual engine speed is determined or measured, and fuel feeding into the engine is controlled making use of the actual engine speed and a speed reference value, **characterized in that**
- actual engine load is determined or measured,
- a load reference value is determined based on the actual engine loads of the engines (10) of the generator sets (12) coupled to the electric grid (18), and
- the speed reference value is determined such that the speed reference value is a sum of:
∘ a first part of the speed reference value obtained as a function of the actual engine load and the load reference value, and
∘ a second part of the speed reference value obtained by
▪ identifying transient state of the load reference value by defining a time derivative of the load reference value and
▪ amplifying the time derivative with a load gain.

2. Method of controlling operation of a engine of a generator set (12) according to claim 1, **characterized in that**
- the load reference value common to all of the engines connected to the electric grid (18) is determined, and
- an engine in a first generator set (12) of said at least two generator sets (12) is operated applying the method according to claim 1,
- an engine of at least a second generator set (12) of said at least two generator sets (12) is operated applying the method according to claim 1, wherein the speed reference value for the engine in the first generator set (12) is determined using different engine characteristics for the load gain than those used for determining the speed reference value for the engine in the at least a second generator set (12).

3. Method of controlling operation of an engine of a generator set (12) according to claim 1 or 2, **characterized in that** actual engine load is determined for each one of the engines (10) connected to the electric grid (18), and the actual engine load of each one of the engines connected to the electric grid (18) is shared between the engines connected to the electric grid (18), and the load reference is determined based on the shared actual engine loads.

4. Method of controlling operation of an engine of a generator set (12) according to claim 1 or 2, **characterized in that** the engine is operated selectively in two alternative operating modes: diesel mode and gas mode and that the engine characteristic for the load gain comprise the currently applied operating mode.

5. Method of controlling operation of an engine of a generator set (12) according to claim 4, **characterized in that** the engine characteristic for the load gain consists of two factors, the first factor is the currently applied operating mode of the engine and the second factor is a variable effecting increasingly or decreasingly to the engine characteristic value.

6. Method of controlling operation of an engine of a generator set (12) according to claim 1, **characterized in that** the time derivative of the load reference value is calculated and filtered by a filter and the result of which is made use in obtaining the speed reference value.

7. Method of controlling operation of an engine of a generator set (12) according to claim 1, **characterized in that** load reference is a manipulated value of the individual actual engine loads of the engines running the generator sets (12) connected to the electric grid (18).

8. Method of controlling operation of an engine of a generator set (12) according to claim 7, **characterized in that** load reference is an average value of the individual loads of the engines running the generator sets (12).

9. Control unit for an engine of a generator set (12) in an assembly of at least two generator sets (12) coupled parallel to an electric grid (18), which control unit comprises
- at least one control signal output (18) for providing a control signal for the engine based on which the fuel admission to the engine is controlled,
- a first control signal input (20) which is connectable with a source of load reference value (14),
- a second control signal input (22) which is connectable to a source of actual engine speed value,
- a third control signal input (24) which is connectable to a source of actual engine load value,
- a speed controller unit (16) arranged to provide the control signal for the engine, based on the actual engine speed value and a speed reference value,
- a load controller unit (28) arranged to provide the speed reference value, **characterized in that**
- the load controller unit comprises a primary load controller unit (30) and a secondary load controller unit (32) coupled parallel with each other, in which the primary load controller unit (30) is arranged to produce a first part of the speed reference value as a function of the actual engine load and a load reference value, and the secondary load controller unit (32) is arranged to provide the second part of the speed reference value by identifying transient state of the load reference value by defining a time derivative of the load reference value and amplifying the time derivative with a load gain.

10. Control unit according to claim 11, **characterized in that** the secondary load controller unit (32) comprises a calculation unit (36), a load gain determination unit (34) and amplification unit (40), wherein the calculation unit (36) is arranged to provide time derivative calculation of the load reference value, and the load gain determination unit (34) is arranged to provide load gain supply signal for the amplification unit (40) according to the existing engine characteristics, which amplification unit (40) is arranged to provide the second part of the speed reference value using the time derivative of the load reference value.

11. Control unit according to claim 11, **characterized in that** the secondary load controller unit (32) comprises a calculation unit (36) and a filter unit (38) adapted to manipulate successively the load reference value for use as input value in the amplification unit (40).

## Patentansprüche

1. Verfahren zum Steuern des Lastverteilungsbetriebs eines Motors eines Aggregats (12) in einer Anordnung aus mindestens zwei Aggregaten (12), die parallel mit einem Stromnetz (18) gekoppelt sind, wobei im Verfahren
- die Istdrehzahl des Motors bestimmt oder gemessen wird und die Kraftstoffzufuhr in den Motor durch Einsatz der Istdrehzahl des Motors und eines Drehzahlreferenzwerts gesteuert wird,
**dadurch gekennzeichnet, dass**
- die Istdrehzahl des Motors bestimmt oder gemessen wird,
- ein Lastreferenzwert basierend auf den Istmotorlasten der Motoren (10) der mit dem Stromnetz (18) gekoppelten Aggregaten (12) bestimmt wird, und
- der Drehzahlreferenzwert derart bestimmt wird, dass der Drehzahlreferenzwert eine Summe ist aus:
∘ einem ersten Teil des Drehzahlreferenzwerts, der als eine Funktion der Istmotorlast und des Lastreferenzwerts erhalten wird, und
∘ einem zweiten Teil des Drehzahlreferenzwerts, der erhalten wird durch
• das Identifizieren eines transienten Zustands des Lastreferenzwerts, indem eine Zeitderivative des Lastreferenzwerts definiert wird, und
• das Verstärken der Zeitderivative mit einer Lastzunahme.

2. Verfahren zum Steuern des Betriebs eines Motors eines Aggregats (12) nach Anspruch 1, **dadurch gekennzeichnet, dass**
- der Lastreferenzwert, der allen mit dem Stromnetz (18) verbundenen Motoren gemein ist, bestimmt wird, und
- ein Motor in einem ersten Aggregat (12) der mindestens zwei Aggregate (12) durch Anwenden des Verfahrens nach Anspruch 1 betrieben wird,
- ein Motor mindestens eines zweiten Aggregats (12) der mindestens zwei Aggregate (12) durch Anwenden des Verfahren nach Anspruch 1 betrieben wird, wobei der Drehzahlreferenzwert für den Motor in dem ersten Aggregat (12) unter Verwendung von Motoreigenschaften für die Lastzunahme, die sich von jenen zur Bestimmung des Drehzahlreferenzwerts für den Motor in dem mindestens einen zweiten Aggregat (12) unterscheiden, bestimmt wird.

3. Verfahren zum Steuern des Betriebs eines Motors eines Aggregats (12) nach Anspruch 1 oder 2, **dadurch gekennzeichnet, dass** die Istmotorlast für jeden der mit dem Stromnetz (18) verbundenen Motoren (10) bestimmt wird, und die Istmotorlast jedes der mit dem Stromnetz (18) verbundenen Motoren zwischen den mit dem Stromnetz (18) verbundenen Motoren geteilt wird, und die Lastreferenz basierend auf den geteilten Istmotorlasten bestimmt wird.

4. Verfahren zum Steuern des Betriebs eines Motors eines Aggregats (12) nach Anspruch 1 oder 2, **dadurch gekennzeichnet, dass** der Motor selektiv in zwei alternativen Betriebsmodi, Dieselmodus und Benzinmodus, betrieben wird und dass die Motoreigenschaft für die Lastzunahme den gegenwärtig angewandten Betriebsmodus umfasst.

5. Verfahren zum Steuern des Betriebs eines Motors eines Aggregats (12) nach Anspruch 4, **dadurch gekennzeichnet, dass** die Motoreigenschaft für die Lastzunahme aus zwei Faktoren besteht, wobei der erste Faktor der gegenwärtig angewandte Betriebsmodus des Motors ist und der zweite Faktor eine Variable ist, die sich steigend oder abnehmend auf den Wert der Motoreigenschaft auswirkt.

6. Verfahren zum Steuern des Betriebs eines Motors eines Aggregats (12) nach Anspruch 1, **dadurch gekennzeichnet, dass** die Zeitderivative des Lastreferenzwerts berechnet und durch ein Filter gefiltert wird und das Ergebnis davon zum Erhalten des Drehzahlreferenzwerts eingesetzt wird.

7. Verfahren zum Steuern des Betriebs eines Motors eines Aggregats (12) nach Anspruch 1, **dadurch gekennzeichnet, dass** die Lastreferenz ein manipulierter Wert der individuellen Istmotorlasten der Motoren, die die mit dem Stromnetz (18) verbundenen Aggregate (12) betreiben, ist.

8. Verfahren zum Steuern des Betriebs eines Motors eines Aggregats (12) nach Anspruch 7, **dadurch gekennzeichnet, dass** die Lastreferenz ein Durchschnittswert der individuellen Lasten der die Aggregate (12) betreibenden Motoren ist.

9. Steuereinheit für einen Motor eines Aggregats (12) in einer Anordnung aus mindestens zwei Aggregaten (12), die parallel mit einem Stromnetz (18) gekoppelt sind, wobei die Steuereinheit Folgendes umfasst:
- mindestens einen Steuersignalausgang (18) zum Bereitstellen eines Steuersignals für den Motor auf dessen Basis der Kraftstoffzugang zum Motor gesteuert wird,
- einen ersten Steuersignaleingang (20), der mit einer Quelle des Lastreferenzwerts (14) verbunden werden kann,
- einen zweiten Steuersignaleingang (22), der mit einer Quelle des Istwerts der Motordrehzahl verbunden werden kann,
- einen dritten Steuersignaleingang (24), der mit einer Quelle des Istwerts der Motorlast verbunden werden kann,
- eine Drehzahlsteuerungseinheit (16), die angeordnet ist, um das Steuersignal für den Motor basierend auf dem Istwert der Motordrehzahl und einem Drehzahlreferenzwert bereitzustellen,
- eine Laststeuerungseinheit (28), die angeordnet ist, um den Drehzahlreferenzwert bereitzustellen, **dadurch gekennzeichnet, dass**
- die Laststeuerungseinheit eine Primäre-LastSteuerungseinheit (30) und eine Sekundäre-LastSteuerungseinheit (32) umfasst, die parallel miteinander gekoppelt sind, wobei die Primäre-Last-Steuerungseinheit (30) angeordnet ist, um einen ersten Teil des Drehzahlreferenzwerts als eine Funktion der Istmotorlast und eines Lastreferenzwerts zu erzeugen, und die Sekundäre-Last-Steuerungseinheit (32) angeordnet ist, um den zweiten Teil des Drehzahlreferenzwerts bereitzustellen, indem ein transienter Zustand des Lastreferenzwerts durch Definieren einer Zeitderivative des Lastreferenzwerts und Verstärken der Zeitderivative mit einer Lastzunahme identifiziert wird.

10. Steuereinheit nach Anspruch 11, **dadurch gekennzeichnet, dass** die Sekundäre-LastSteuerungseinheit (32) eine Berechnungseinheit (36), eine Lastzunahme-Bestimmungseinheit (34) und Verstärkungseinheit (40) umfasst, wobei die Berechnungseinheit (36) angeordnet ist, um die Berechnung der Zeitderivative des Lastreferenzwerts bereitzustellen, und die Lastzunahme-Berechnungseinheit (34) angeordnet ist, um ein Lastzunahme-Versorgungssignal für die Verstärkungseinheit (40) gemäß den vorhandenen Motoreigenschaften bereitzustellen, wobei die Verstärkungseinheit (40) angeordnet ist, um den zweiten Teil des Drehzahlreferenzwerts unter Verwendung der Zeitderivative des Lastreferenzwerts bereitzustellen.

11. Steuereinheit nach Anspruch 11, **dadurch gekennzeichnet, dass** die Sekundäre-LastSteuerungseinheit (32) eine Berechnungseinheit (36) und eine Filtereinheit (38) umfasst, die ausgelegt sind, um den Lastreferenzwert zur Verwendung als Eingangswert in die Verstärkungseinheit (40) sukzessive zu manipulieren.

## Revendications

1. Procédé de commande d'une fonction de partage de charge d'un moteur d'un groupe électrogène (12) dans un ensemble d'au moins deux groupes électrogènes (12) couplés en parallèle à un réseau électrique (18), ledit procédé comprenant :
- la détermination ou la mesure d'une vitesse de moteur réelle, et la commande de l'introduction de carburant dans le moteur sur la base de la vitesse de moteur réelle et d'une valeur de vitesse de référence,
**caractérisé en ce que**
- la charge de moteur réelle est déterminée ou mesurée,
- une valeur de charge de référence est déterminée sur la base des charges de moteur réelles des moteurs (10) des groupes électrogènes (12) couplés au réseau électrique (18), et
- la valeur de vitesse de référence est déterminée de telle façon que la valeur de vitesse de référence est une somme de :
∘ une première partie de la valeur de vitesse de référence obtenue en fonction de la charge de moteur réelle et de la valeur de charge de référence, et
∘ une deuxième partie de la valeur de vitesse de référence obtenue par
• identification de l'état transitoire de la valeur de charge de référence par définition d'une dérivée temporelle de la valeur de charge de référence et
• amplification de la dérivée temporelle avec une augmentation de charge.

2. Procédé de commande du fonctionnement d'un moteur d'un groupe électrogène (12) selon la revendication 1, **caractérisé en ce que**
- la valeur de charge de référence commune à tous les moteurs reliés au réseau électrique (18) est déterminée, et
- un moteur dans un premier groupe électrogène (12) parmi lesdits au moins deux groupes électrogènes (12) est actionné en appliquant le procédé selon la revendication 1,
- un moteur d'au moins un deuxième groupe électrogène (12) parmi lesdits au moins deux groupes électrogènes (12) est actionné en appliquant le procédé selon la revendication 1, dans lequel la valeur de vitesse de référence pour le moteur dans le premier groupe électrogène (12) est déterminée à l'aide de caractéristiques de moteur pour l'augmentation de charge différentes de celles utilisées pour la détermination de la valeur de vitesse de référence pour le moteur dans l'au moins un deuxième groupe électrogène (12).

3. Procédé de commande du fonctionnement d'un moteur d'un groupe électrogène (12) selon la revendication 1 ou 2, **caractérisé en ce que** la charge de moteur réelle est déterminée pour chacun des moteurs (10) reliés au réseau électrique (18), et la charge de moteur réelle de chacun des moteurs reliés au réseau électrique (18) est partagée entre les moteurs reliés au réseau électrique (18), et la référence de charge est déterminée sur la base des charges de moteur réelles partagées.

4. Procédé de commande du fonctionnement d'un moteur d'un groupe électrogène (12) selon la revendication 1 ou 2, **caractérisé en ce que** le moteur est actionné sélectivement dans deux modes de fonctionnement alternatifs : un mode diesel et un mode gaz, et la caractéristique de moteur pour l'augmentation de charge comprend le mode de fonctionnement appliqué actuellement.

5. Procédé de commande du fonctionnement d'un moteur d'un groupe électrogène (12) selon la revendication 4, **caractérisé en ce que** la caractéristique de moteur pour l'augmentation de charge consiste en deux facteurs, le premier facteur étant le mode de fonctionnement du moteur appliqué actuellement et le deuxième facteur étant une variable s'appliquant à la hausse ou à la baisse à la valeur de la caractéristique de moteur.

6. Procédé de commande du fonctionnement d'un moteur d'un groupe électrogène (12) selon la revendication 1, **caractérisé en ce que** la dérivée temporelle de la valeur de charge de référence est calculée et filtrée par un filtre et le résultat est utilisé pour obtenir la valeur de vitesse de référence.

7. Procédé de commande du fonctionnement d'un moteur d'un groupe électrogène (12) selon la revendication 1, **caractérisé en ce que** la référence de charge est une valeur manipulée des charges de moteur réelles individuelles des moteurs faisant tourner les groupes électrogènes (12) reliés au réseau électrique (18).

8. Procédé de commande du fonctionnement d'un moteur d'un groupe électrogène (12) selon la revendication 7, **caractérisé en ce que** la référence de charge est une valeur moyenne des charges individuelles des moteurs faisant tourner les groupes électrogènes (12).

9. Unité de commande pour un moteur d'un groupe électrogène (12) dans un ensemble d'au moins deux groupes électrogènes (12) couplés en parallèle à un réseau électrique (18), ladite unité de commande comprenant :
- au moins une sortie de signal de commande (18) destinée à fournir un signal de commande pour le moteur, sur la base duquel l'alimentation du moteur en carburant est commandée,
- une première entrée de signal de commande (20) apte à être reliée à une source de valeur de charge de référence (14),
- une deuxième entrée de signal de commande (22) apte à être reliée à une source de valeur de vitesse de référence du moteur,
- une troisième entrée de signal de commande (24) apte à être reliée à une source de valeur de charge de moteur réelle,
- une unité de commande de vitesse (16) conçue pour fournir le signal de commande pour le moteur, sur la base de la valeur de vitesse réelle du moteur et d'une valeur de vitesse de référence,
- une unité de commande de charge (28) conçue pour fournir la valeur de vitesse de référence, **caractérisé en ce que**
- l'unité de commande de charge comprend une unité de commande de charge primaire (30) et une unité de commande de charge secondaire (32) couplées l'une à l'autre en parallèle, l'unité de commande de charge primaire (30) étant conçue pour produire une première partie de la valeur de vitesse de référence en fonction de la charge de moteur réelle et d'une valeur de charge de référence, et l'unité de commande de charge secondaire (32) étant conçue pour fournir la deuxième partie de la valeur de vitesse de référence par identification d'un état transitoire de la valeur de charge de référence par définition d'une dérivée temporelle de la valeur de charge de référence et par amplification de la dérivée temporelle avec une augmentation de charge.

10. Unité de commande selon la revendication 11, **caractérisée en ce que** l'unité de commande de charge secondaire (32) comprend une unité de calcul (36), une unité de détermination d'augmentation de charge (34) et une unité d'amplification (40), dans laquelle l'unité de calcul (36) est conçue pour fournir un calcul de dérivée temporelle de la valeur de charge de référence, et l'unité de détermination d'augmentation de charge (34) est conçue pour fournir un signal d'apport d'augmentation de charge à l'unité d'amplification (40) en fonction des caractéristiques de moteur existantes, ladite unité d'amplification (40) étant conçue pour fournir la deuxième partie de la valeur de vitesse de référence à l'aide de la dérivée temporelle de la valeur de charge de référence.

11. Unité de commande selon la revendication 11, **caractérisé en ce que** l'unité de commande de charge secondaire (32) comprend une unité de calcul (36) et une unité de filtrage (38) adaptées pour manipuler successivement la valeur de charge de référence pour une utilisation comme valeur d'entrée dans l'unité d'amplification (40).
